# EUROPEAN PATENT APPLICATION

(11) **EP 1 302 798 A1**
(43) Date of publication of application: **16.04.2003**
(21) Application number: 02079202.4
(22) Date of filing: 10.10.2002
(51) Int. Cl.: G02B 6/44

(54) **Rotation mechanism for a panel in a distributing-box**

(30) Priority: 10.10.2001 NL 1019149
(71) Applicant: Fiber-XS B.V., 3641 RT Mijdrecht (NL)
(72) Inventor: Esche, William David, 4822 RC Breda (NL)
(74) Representative: 't Jong, Bastiaan Jacob

(57) **Abstract**

The invention relates to a package (2) for the assembly, in a distribution box for cables (1) of a panel (6) which is connected to the package (2) by means of rotational mechanism, in which the rotational mechanism (5) comprises two rotational points (7,8) disposed at a distance from each other, making it possible to rotate the panel (6) out of the package (2) entirely and to use the entire surface of the panel (6) for completing underground cables (1) or making connections.

## Description

The present invention relates to a package for mounting a panel in a distribution box for cables which is connected to the package by means of a rotational mechanism.

In the area of telecommunication and telematics, glass fibre cable is used increasingly often as an alternative for, for example, copper connections and beam transmission. Due to the small diameter of the glass fibre, large numbers of fibres in a cable can be processed. An underground glass fibre cable having a diameter of, for example, 14 mm often already contains about 96 glass fibres. Said thin fibres are fragile, however, and cannot be readily connected to equipment. The fibres from these underground cables must thereto be completed aboveground on thicker cords, the so-called pigtails and patch cords. Said cords contain the same thin glass fibre, but are provided with a thicker jacket of, for example, PVC with aramide tension wire for strength. These strong pigtails and patch cords can be processed manually, but on the other hand extra demands are placed upon inter alia the bending radius and the prevention of undesired sticking behind protruding or moving parts in the box which may cause the fibre within to rupture.

The completion for the larger glass fibre networks takes place in special boxes, often called Optical (Main) Distribution Frame O(M)DF. In a box, various underground cables are completed or large numbers of (cross)connections are made. This means that boxes having a width x depth x height dimension of, for example, 900 x 300 x 2200 mm can accommodate even more than 1000 pigtails and patch cords.

The completion of an underground cable (joining a pigtail to the underground cable) or making (cross)connections (the "patching" of two cords to each other) takes place on panels residing in the distribution box. In the operational state, the panel resides entirely closed within the box. In the event of modifications the panel must be accessible, and it is then slid or rotated out of the box, dependent upon the mechanism provided between the panel and the package. The sensitive pigtails and patch cords must therefore also be able to securely follow said opening and closing movement. As a rule the large numbers of pigtails and patch cords are conducted to either side or the rear side of the panels, since the space at the front must be kept free for placing the panel in, or retrieving it from, the box. Especially in existing narrow boxes having a width x depth x height dimension of, for example, 600 x 300 x 2200, there is little space available and the user is obliged to deploy wide boxes. Furthermore, after an initial installation, the cords at the rear in the box are no longer accessible, so that the accessibility for smaller packages may be qualified as bad.
Increasingly often, users need narrower boxes. This, after all, reduces floor space costs in exchanges, but also allows boxes to be more easily placed near new users in existing on-site "meter cupboards". In order to be able to respond hereto, a new rotational mechanism has been designed.

According to the invention, the package is characterised in that the rotational mechanism comprises two rotational points situated at a distance from each other. Because of this, it is possible to rotate the panel out of the package entirely. The whole surface of the panel can be used for completing the underground cables or for making the connections.

The rotational points are preferably located at a distance from the front of the package so that, after rotation, the panel lies substantially outside the package.

In a preferred embodiment, the cables are conducted from a predetermined point on the package along the rotational points to a predefined point on the rotatable panel. The cables are bent from a vertical input into the distribution box to the horizontal plane near a package. During rotation of the panel, the cables are bent in the horizontal plane only.

Further, the distance between the rotational points is dimensioned such that each of the cables exceeds a predetermined minimal bending radius in the rotational mechanism. Particularly upon application of glass fibre cable, it is of importance to guarantee that each fibre does not exceed a certain minimal bending radius in order to prevent signal loss or signal disturbance.

When the distance between the rotational points on the one hand and the front of the package on the other are dimensioned such that the length of the centre line of a bundle remains equal during rotation, the panel can be rotated without exercising substantial tensional or compressional stresses on the cable bundle.

In addition, the invention relates to a distribution box for cables, comprising a rear wall, two side walls and an assembly system disposed between the side walls for the assembly of several packages. With the double rotational mechanism according to the invention, an optimisation is obtained of accessibility to the panels as well as surface area for implementing connections.

The rotational points are preferably disposed in the centre of the front edge of each panel, whereby in the distribution box extra space with respect to prior art boxes is created for inputting and outputting cables. Said space is particularly needed to satisfy the minimal bending radius when using glass fibre cable with respect to the large quantities of pigtails and patch cords which must be accommodated.

In a first embodiment, the assembly system is formed by two columns disposed at a distance from each other between the side walls of the box. The distance between the columns is, for example, 19 inches or conforms to the ETSI standard, so that in Europe existing distribution box systems and accessories can be used. Another dimension can be 23 inches, which is used as a standard in the United States.

In a second embodiment, the assembly system is formed by an assembly bar disposed between the side walls of the box. The assembly bar is advantageously disposed near the rotational points through which the forces can be conducted.

Finally, blocking means can be provided for blocking rotation of each panel over the second rotational point, said blocking only being able to be cancelled by authorised persons. In this way only a part of the panel can be rotated out of the package, another part thereof only being accessible for authorised persons.

The invention will now be further explained with reference to the attached drawings. In the drawings:
Figure 1 shows a perspective view of a part of a first embodiment of a distribution box according to the invention, and
Figure 2 shows a perspective view of a part of a second embodiment of a distribution box according to the invention.

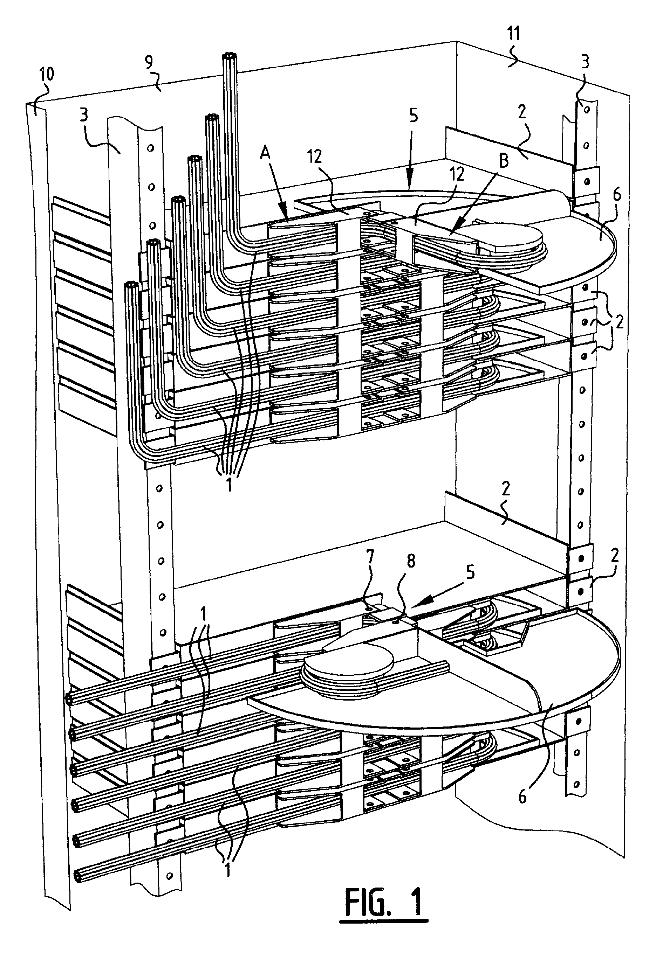

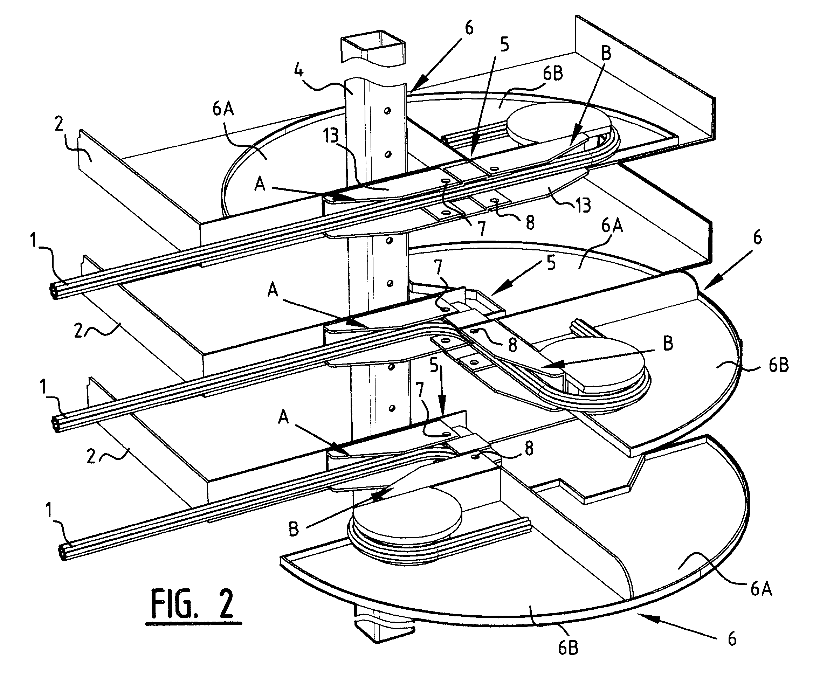

In Figure 1, a portion of a distribution box for cables 1 according to a first form of embodiment is shown. The distribution box comprises a rear wall 9 and two side walls 10,11. Between the side walls 10,11 of the distribution box, an assembly system for the assembly of several packages 2 is disposed. In the first embodiment, the assembly system is formed by two columns 3 disposed at a distance from each other between the side walls 10,11 of the box. In the second form of embodiment shown in Figure 2, the assembly system is formed by an assembly bar 4 disposed between the side walls 10,11 (not shown in Figure 2) of the box. The packages 2 are mounted in the distribution box underneath each other and screwed to the assembly system 3,4.

Via a rotational mechanism 5, a panel 6 is always attached to a package 2. The rotational mechanism 5 comprises two remotely disposed rotational points 7, 8. The rotational points 7, 8 are disposed at a distance from the front of each package 2. Both abovementioned distances are calculated on the basis of the requirement of a minimal bending radius and a constant length of the centre line of a bundle 1.

The inputting and outputting of cables 1 is often vertically directed. The cables 1 are conducted from a vertical position to a horizontal position to a fixed point A on the package 2. From said point A, the bundles of cables 1 are conducted to the rotatable panel 6. B marks the fixed point on each rotatable panel 6. For conducting the cable bundles, cable brackets 12 (Figure 1) or cable ducts 13 (Figure 2) are used. Unlike the cable bracket 12, a cable duct 13 is open at the front, so that a cable bundle 1 can be inputted to the panel 6 directly and without being conducted through openings.

It can be clearly seen in Figures 1 and 2 that the rotational points 7,8 of each panel are disposed about half way at the front edge of the panel. In this way, the space for the panels 6 on the left side of the rotational points 7,8 can also be used for inputting and outputting cables 1. The distribution box with cable inputting and outputting at the left side can also be implemented mirror wise.

In Figure 2, three steps are shown from top to bottom in the rotational movement of a panel 6. The first rotational movement is with respect to point of rotation 7. The length of the centre line of the cable bundle A-B is unchanged with respect to the closed state of the panel, as shown at the top of Figure 2. The curve which the cable bundle makes between point A and B after the first rotational movement is 90 °. The bending radius of the cable bundle does not extend below a predetermined minimal bending radius. For glass fibre, a bending radius of, for example, 30 mm is used.

With the second rotational movement, rotation takes place with respect to point of rotation 8 (see the lowermost panel in Figure 2). Again the length of the centre line of cable bundle A-B remains unchanged with respect to the previous two positions. The curve which the cable bundle makes between point A and B is 180 °, while again the bending radius of the cable bundle does not extend below the minimal value. It can be clearly seen that, in said last position, the panel 6 is rotated completely out of the package 2 and thus out of the distribution box. In this case, the panel 6 substantially extends out of the package 2.

The brackets illustrated in Figure 1 and 2 are preferably open at the front, allowing the cable bundle to be conducted into the panel 6 directly and without passing through holes.

The distribution box can be provided with blocking means for blocking a rotation of each panel 6 with respect to the second rotational point 8. By allowing each panel to open in two different positions, as shown in Figure 2, the rearmost part 6A of the panel for non-authorised access can be closed off. In Figure 1 as well as Figure 2, it can be clearly seen that the point A at which the cable bundles are conducted through guide elements 12,13 on the package 2, and thus also the point at which the cable bundles can be conducted into the box from a vertical position to a horizontal position, is clearly located to the right at a distance from the left side wall 10 and even the left column 3 of the distribution box. Hereby more space for inputting and outputting cables is created with respect to prior art distribution boxes.

By the double rotational movement it has become possible to achieve a better usage of the box space while retaining almost the maximal panel surface.

Although glass fibre cables are discussed above, it shall be clear that the rotational mechanism according to the invention can also be employed for other cables, for example of copper.

## Claims

1. A package for the assembly, in a distribution box for cables, of a panel, which is connected to the package by means of a rotational mechanism, **characterised in that** the rotational mechanism comprises two rotational points disposed at a distance from each other.

2. A package according to Claim 1, in which the rotational points are disposed at a distance from the front of the package.

3. A package according to Claim 1 or 2, in which the cables are conducted from a predetermined point on the package along the rotational points to a predetermined point on the rotatable panel.

4. A package according to Claim 3, in which the distance between the rotational points is dimensioned such that each of the cables exceeds a predetermined minimal bending radius in the rotational mechanism.

5. A package according to Claim 5, in which the distance between the rotational points on the one hand and the front of the package on the other is dimensioned such that the length of the centre line of a bundle during rotation remains equal.

6. A distribution box for cables comprising a rear wall, two side walls and an assembly system, disposed between the side walls, for the assembly of several packages according to any of the preceding claims.

7. A distribution box according to Claim 6, in which the rotational points are disposed approximately in the centre of the front edge of each panel.

8. A distribution box according to Claim 6 or 7, in which the assembly system is formed by two columns disposed at a distance from each other between the side walls of the box.

9. A distribution box according to Claim 8, in which the distance between the columns is 19 or 23 inches.

10. A distribution box according to Claim 6 or 7, in which the assembly system is formed by an assembly bar disposed between the side walls of the box.

11. A distribution box according to any of the Claims 6-10, in which blocking means are provided for blocking the rotation of each panel with respect to the second rotational point.
